# EUROPEAN PATENT SPECIFICATION

(11) **EP 4 444 524 B1**
(45) Date of publication and mention of the grant of the patent: **26.11.2025**
(21) Application number: 22830595.9
(22) Date of filing: 14.12.2022
(51) Int. Cl.: B29B 17/04, B29B 17/02

(54) **PROCESS FOR RECOVERY OF COMPONENT MATERIALS FROM COMPOSITE PRODUCTS COMPRISING UNCURED RUBBER AND A REINFORCEMENT MATERIAL**
VERFAHREN ZUR RÜCKGEWINNUNG VON KOMPONENTENMATERIALIEN AUS VERBUNDPRODUKTEN, DIE UNVULKANISIERTEN GUMMI UND EIN VERSTÄRKUNGSMATERIAL ENTHALTEN
PROCÉDÉ DE RÉCUPÉRATION DE MATÉRIAUX CONSTITUTIFS À PARTIR DE PRODUITS COMPOSITES COMPRENANT DU CAOUTCHOUC NON VULCANISÉ ET UN MATÉRIAU DE RENFORCEMENT

(30) Priority: 15.12.2021 GB 202118205
(43) Date of publication of application: 16.10.2024
(73) Proprietor: Recyclatech Group Limited, Glasgow G2 1RW (GB)
(72) Inventor: BELL, David, London Greater London EC2V 6AA (GB); TURNER, Andrew, London Greater London EC2V 6AA (GB)
(74) Representative: Barker Brettell LLP
(86) International application number: PCT/GB2022/053232
(87) International publication number: WO 2023/111563

(56) References cited:
- WO-A1-2021/177848
- DE-T5- 112020 006 231
- IT-A1- MI20 081 559
- US-A- 2 927 342
- US-A- 4 342 647
- US-A- 5 115 983
- US-A1- 2020 189 140

## Description

The present invention relates to a process for the recovery of component materials from composite products. The process is suitable for recovering uncured rubber in a re-usable form and can enable the re-compounding of the uncured rubber as a virgin material.

The process of the invention can, in particular, be used to recover uncured rubber, metal and fabric from a composite product in a form whereby each of these component materials can be re-used.

### Background to the Invention

Composite waste products that include cured (vulcanised) rubber, e.g. end-of-life tyres, can be recycled by the use of mechanical size reduction equipment, such as shredders, granulators and fine powder mills.

During rubber goods manufacturing processes, waste is generated that may include uncured or "green" rubber. For example, a tyre is manufactured from substrates that contain polymers as well as metal and fabric reinforcements. Metal beads and fabric cords are used in the plies and to strengthen the side walls. At any point during the manufacturing process, the substrates may be rejected. The rejection may be due to poor assembly, thickness or content variation, or some other such fault or failure on quality control. The rejected part is generally baled or packed into pallet boxes and sent for processing or disposal.

Conventional processes such as shredding and granulation, as employed for cured end-of-life tyres, cannot be used to process these substrates unless significant quantities of anti-tack additive are used. Without the addition of such additives, the uncured rubber sticks to surfaces and to itself. When exposed to metal blades the uncured rubber will stick to the blade and build up to form an agglomerated ball. Continued exposure to a friction source heats the uncured rubber and leads to risk of fire. Although suitable additives are known, such as talc, chalk and metal soaps, the addition of such additives significantly impacts the suitability of the uncured rubber for reprocessing as a virgin material.

In general, the presence of metal and fabric within the substrates does not allow for recovery and re-compounding of the uncured rubber as a virgin material. The rubber that is adhered to the metal and fabric cannot be removed easily due to the extremely tacky nature of uncured rubber. Separation of the component materials is essential if these materials (uncured rubber, metal and fabric) are to be re-used.

Because of this difficulty, waste substrates that include uncured rubber are generally sent for burning.

The production of tyres is associated with a high carbon footprint. It would therefore be desirable to recover uncured rubber for re-use in primary applications as a virgin material, to offset the carbon footprint and make gains on the emissions generated. The re-use of the rejected rubber substrates would also reduce the demand for increased rubber plantations, replacing forestry regions. In addition, the demand for oil-derived products, such as synthetic rubber polymers and carbon black, could advantageously be reduced.

The scale of the waste stream is around 10% of all tyres produced annually. Each year, about 40 million tonnes of natural rubber, synthetic rubber and carbon black goes to waste. It is apparent that there would be a significant benefit to the environment if more efficient use of waste streams was achieved.

However, any suitable waste management solution would need to be able to operate on a large industrial scale with significant throughput volumes.

Other than the mechanical treatment route, only small-scale and non-commercially feasible attempts have been made, e.g. stripping individual wires from rubber sheets.

Non-mechanical pulverisation processes are known, for example using water jets, and these have in particular been utilised for recycling used products which comprise vulcanised rubber.

In JP2005046758A a method of crushing a rubber tyre with a water jet is described, wherein the water jet is jetted at a pressure of 70 to 175 MPa and a flow rate of 30 litre / min or more by a nozzle having a diameter of φ1.0 to φ5.0 mm.

US5944925A discusses the re-treading of a tyre by removing the worn tread and mounting a new tread. The document provides a process for treating vulcanized rubber surfaces before bonding in which surface roughness is created and degraded surface particles are eliminated by applying a high-pressure fluid jet.

In ITMI20081559A1 a process is detailed for recycling end-of-life tyres. The process uses water-jet technology to disintegrate the tyre and obtain rubber powder, steel and nylon fibre from tyre breakdown.

In RU2114731 a process is described that carries out water-jet cutting of worn rubber automobile tyres into rubber crumb. When cutting metal cord tyres, the rubber is separated from the metal cord and the latter can also be used as recyclable material or as scrap metal.

In WO2011/158002A1 a method is provided for reducing a used vehicle track into useable constituent parts. The method uses a high-pressure water jet and produces a rubber crumb slurry which may also include a fabric component.

WO2012/127510 treats vulcanised rubber using a water jet. Pressures of 1000-4000 bar are described, with water flows of 8-16 litres per minute.

WO2013/105553A1 pulverises rubber material, e.g. to a particle size of 0.5mm to 3mm, and describes use of a water jet to remove impurities from this rubber crumb.

EP3815867A1 describes recycling a thermosetting polymer object by a process that involves using water jet technology to shatter the thermosetting polymer followed by drying the shattered thermosetting polymer.

RU2746836C1 describes separating unvulcanized rubber from a metal cord in a waste rubberized metal cord. The method uses the action of water under high pressure, which is stated to destroy the bond between rubber and metal in a rubberized steel cord. Specifically, an incoming material is provided which is scrap / waste rubberized metal cord (unvulcanized rubber compound) and this is located in a working chamber on stainless steel grates and is then impacted with a water jet having pressure power from 500 to 3000 bar with a flow rate of 15 litres per minute or more. This is described as leading to a complete separation of the rubber by violating the integrity of the incoming material.

However, there remains a need for a process that allows recovery of all the individual materials from an uncured rubber composite product, in a form suitable for re-use.

### Summary of the Invention

The invention provides a process for the recovery of component materials from composite products, the process comprising:
a) providing a composite product that comprises a plurality of component materials, said component materials including uncured rubber and reinforcement material selected from fabric and/or metal;
b) preparing one or more standardised sheets of composite product, wherein each standardised sheet has a maximum thickness of 125mm or less, preferably 110mm or less, more preferably 100mm or less;
c) jetting pressurised water onto one or more surface of the standardised sheets, whereby the water is at a pressure of up to 500 bar, thereby stripping the uncured rubber from the reinforcement material and resulting in a mixture of uncured rubber fabric and reinforcement material.

The process of the invention is an industrially viable process that can take uncured rubber and reinforcement material selected from fabric and/or metal from being in a composite form, where they are associated together, to being in a mixture form where they are separate from each other. The component materials can then be individually re-used.

Beneficially, the uncured rubber is obtained in a form where it is free from contamination and is suitable for re-compounding and re-use. In a further benefit, the reinforcement material (metal and/or fabric) is obtained in a form where it is undamaged and are suitable for re-use.

In particular, by preparing the composite product into standardised sheets that have a maximum thickness of 125mm, such as 110mm or less, and preferably a maximum thickness of 100mm, it has been determined that the uncured rubber can be stripped from the metal and/or fabric using non-aggressive conditions, meaning that damage to the metal and/or fabric is avoided.

This contrasts with prior processes where water is used at very high pressures and thus acts to cut through the entire product, causing damage to at least some of the component materials. It will be appreciated that if the fabric is torn apart it cannot be re-used and if the metal is cut this can expose hazardous metal shards.

It is further beneficial to avoid aggressive conditions in terms of preventing contamination of the rubber. Aggressive conditions that cut or tear through the materials results in contamination of the rubber by metal and/or fabric fragments. It is clearly advantageous when considering re-use of the rubber that such contamination is avoided.

By standardising the sheets so that they are relatively thin, and preferably are substantially uniform in their thickness, it has been found that pressurised water at 500 bar or less is effective to strip the rubber from the reinforcement material and, beneficially, the rubber forms into crumbs and/or granules which can be easily removed and handled.

It has been determined that in step c) the water should not be used at a pressure of more than 500 bar because this leads to damage to the reinforcement material, especially fabric material. In one embodiment, the water is used at a pressure of less than 500 bar. In one embodiment, the water is used at a pressure of from 110 bar up to 500 bar, or from 120 bar up to 500 bar, preferably from 130 bar up to 500 bar. It may be that in one preferred embodiment the water is used at a pressure of from 130 to 450 bar, such as from 150 to 400 bar, e.g. from 200 to 400 bar.

In one embodiment the reinforcement material is metal, and the pressure used is from 130 to 500 bar, for example from 150 to 450 bar or from 200 to 400 bar, such as from 300 to 400 bar, e.g. about 375 bar. Above 500 bar it has been determined that metal wires are stripped apart too aggressively, and the rubber will not be fully removed from the resulting metal wire strips.

In one embodiment the reinforcement material is fabric, and the pressure used is from 130 to 400 bar or from 200 to 400 bar, for example from 225 to 375 bar, such as from 275 to 350 bar, e.g. about 340 bar.

In the present invention a constant unit force per area can be applied in the jetting stage, e.g. using nozzles to direct the pressurised water onto the surface. The process of the invention is controlled and repeatable on an industrial scale. By carrying out the standardisation of the sheets, the force applied by the water jets is uniform across the sheet.

The pressures used in step c) of the process of the present invention are of a magnitude similar to power washing, rather than being much higher water jet cutting pressures. Water jet cutting usually involves pressures of at least around 10,000psi (689 bar), and normally above 20,000psi (1379 bar), e.g. around 60,000psi (4136 bar) or higher.

In one embodiment of the invention, the process further comprises one or more of, such as two or more of, the following steps:
d) separating metal from the mixture, e.g. by use of a magnet; and/or
e) separating fabric from the mixture, e.g. by use of a filter or screen or by aspiration or floatation; and/or
f) separating the uncured rubber from the mixture, e.g. the rubber may be drawn off.

It will be appreciated that steps d) and e) and f) can be carried out in any order.

In one embodiment, steps d) and e) are carried out (in either order) and the uncured rubber is left behind as the final separated product.

In one preferred embodiment the process results in three separate products: (i) uncured rubber, (ii) metal and (iii) fabric. Each of these separate products is suitable for re-use.

The uncured rubber may optionally be dried, for example using a dewatering and drying conveyor. The uncured rubber may optionally undergo rubber conditioning. In one embodiment, the uncured rubber is subsequently re-compounded.

### Detailed Description of the Invention

### Composite product

The process of the invention allows the recovery of component materials from composite products. The composite product comprises uncured rubber and reinforcement material selected from fabric and/or metal.

The fabric may be synthetic fibre material. In one embodiment, the composite product comprises fabric selected from: rayon, nylon, polyester and aramid, and combinations thereof. The fabric may, for example, be in the form of strips or strands or fibres.

The metal may be an alloy. In one embodiment, the composite product comprises metal which is steel, such as stainless steel. The steel may, for example, be in the form of steel cord and/or steel wire.

The composite product may be a waste product generated during a rubber goods manufacturing process. In one embodiment, the composite product is a waste product from a tyre manufacturing process.

As the skilled person will be aware, during the tyre manufacturing process, individual components are produced that are subsequently assembled into a product that comprises uncured rubber, together with fabric and metal reinforcement materials.

One product formed during the tyre manufacturing process will comprise fabric friction material in the form of plies, e.g. produced from nylon fibre such as PA6 fibre, and aligned and coated with uncured rubber. The fabric strands may be coated with an adhesion promoter.

Another product formed during the tyre manufacturing process is a metal friction material comprising steel wire encapsulated into uncured rubber. These metal friction materials may, for example, be produced as rings, ready for tyre bead reinforcement, or as flat sheets to be incorporated into the body of a tyre.

A further product will then be assembled, which can form the body of a tyre, and this will contain both fabric and metal reinforcements as well as uncured rubber.

A waste product from the tyre manufacturing process can therefore be any such product which has been rejected, e.g. due to poor assembly, thickness or content variation, or some other such fault or failure on quality control. These waste products are not the same as end-of-life tyres; the rubber is uncured (unvulcanised).

The skilled person will appreciate that different composite products can have a range of different compositions. A whole tyre may contain relatively low levels of fibre and metal as reinforcement materials, e.g. as low as 5wt% fabric and 12wt% metal, due to the presence of the tread or butyl liner, whereas individual component parts used to make tyres can have much higher percentage levels of fibre or metal reinforcement materials. For example, a metal friction material may have a metal content as high as 90wt% and a fabric friction material may have a fabric content as high as 80wt%. Essentially, these friction material products comprise the reinforcement materials together with a rubber coating to promote adhesion.

The composite product provided in step a) may, for example, include 5wt% or more, or 10wt% or more, or 20wt% or more uncured rubber. **In** one embodiment, the amount of uncured rubber could be in the range of from 5wt% to 90wt%.

The composite product provided in step a) may, for example, include 10wt% or more, or 15wt% or more, or 20wt% or more, reinforcement materials which may be fibre and/or metal. **In** one embodiment, the amount of fabric and/or metal reinforcement materials could be in the range of from 10wt% to 90wt%.

The composite product may optionally include additional materials other than uncured rubber and reinforcement materials. The skilled person will in particular be aware of chemicals known in the art for inclusion in tyres and which are commonly compounded with the uncured rubber.

For example, additional materials that may be present in the composite product include one or more of: fillers (e.g. selected from carbon black, silica, carbon and chalk, and combinations thereof), plasticisers, vulcanisation agents (e.g. sulphur and/or zinc oxide), and anti-ageing agents.

As the skilled person will appreciate, these additional materials would normally be compounded with the uncured rubber and therefore in the present invention when such additional materials are present the recovery of uncured rubber is recovery of the uncured rubber in a compounded form that includes any such additional materials. Thus, the uncured rubber is recovered in a form where it is ready to be cured.

### Sheets of composite product

To ensure the effectiveness of the process the starting product must be standardised to ensure effective removal of the uncured rubber from the reinforcement material.

The process therefore includes step b) in which one or more standardised sheets of composite product are prepared, wherein each standardised sheet has a maximum thickness of 100mm or less.

Thus, sheets of the composite product are required.

If the composite product was not provided in sheet form in step a), for example if it is provided in the form of a bale, then step b) comprises:
b-i) cutting the composite product into the form of one or more cut sheets;
   and then
b-ii) carrying out thickness standardisation on each cut sheet, such that each sheet has a thickness of 125mm or less, such as 110mm or less, preferably 100mm or less.

If the composite product is already provided in sheet form in step a), then step b) comprises:
b-0) carrying out thickness standardisation, such that each sheet has a thickness of 125mm or less, such as 110mm or less, preferably 100mm or less.

If step b-i) is required, the cutting may be achieved by any suitable method. For example, high-pressure water jet cutting may be used or, in one preferred embodiment, a shear guillotine knife may be used. A low-speed bandsaw could also be contemplated for use.

The cutting may be carried out using a shear cutting system. The composite product, e.g. in the form of bales, may be mounted onto a conveyor and fed to the cutting head. The cutting head then removes a sheet from the leading edge of the composite product. This cutting step to remove a sheet is then repeated as necessary to obtain one or more sheets.

Once a sheet has been obtained, optionally this sheet may be cut again (e.g. it may be cut in half) to reduce the thickness of the sheet.

The (or each) cut sheet as obtained in step b-i) may, for example, be about 500mm thick or less, e.g. from 150 to 400mm thick, or from 175 to 300mm thick, such as about 200mm thick.

The skilled person will appreciate that the sheets may be any length and width and the only limitation in this regard is having equipment of a suitable size to handle the sheets and in particular carry out the thickness standardisation step. Thus, the invention is not restricted to sheets of any particular dimension in terms of width and length.

In one embodiment, the cut sheets have a width of up to 5m, such as up to 3m, or up to 2m, e.g. the width may be from 0.1m to 2.5m or from 0.2m to 2m.

In one embodiment, the cut sheets have a length of up to 5m, such as up to 3m, or up to 2m, e.g. the width may be from 0.1m to 2.5m or from 0.2m to 2m.

It may be that the width and length are approximately the same, such that the sheets are substantially square in cross section, but this is not essential. Rectangular shapes can also be processed readily.

### Thickness standardisation

The sheets of composite product (as provided in step a) or as obtained in step b-i)) undergo a thickness standardisation.

The thickness standardisation step is to ensure that each sheet has a maximum thickness of 125mm or less, preferably 110mm or less, more preferably 100mm or less.

The thickness standardisation step comprises the application of pressure onto each sheet. In general, a technique that involves applying weight to a metal plate as a force is useful.

Any suitable apparatus may be used in this regard. The skilled person will be well aware of pressing equipment, such as a calendar press, belt press or hydraulic press, any of which can suitably be used.

In general, any equipment or technique that will reduce the thickness of the sheets can be used; what is important is that the sheet have a maximum thickness that does not exceed 125mm; preferably 110mm or less, more preferably 100mm or less.

The skilled person will also be aware of techniques that allow the thickness of the sheet to be achieved. In addition, measuring the thickness of a sheet to check it meets the requirements can be readily achieved using standard equipment such as a gauge or calliper.

In one embodiment, the desired thickness is achieved by a physical stop system. A press mould tool has a mould cavity within which the sheet can be placed, between a top plate and a bottom plate. This tool is provided with a protrusion, located between the top and bottom plates, which acts as a stop for movement of the top plate towards the bottom plate and thus prevents the press from completely closing. The height that the protrusion extends above the bottom plate thus controls the thickness of the pressed sheet. The protrusion can be a single dowel or lug, or multiple spaced dowels or lugs can be used, or a continuous protrusion wall can extend all the way round the cavity perimeter.

In another embodiment, a proximity switch can be used. The switch is configured to be activated when the correct thickness is achieved and therefore stops the closing mechanism at that time.

The proximity switch may in particular be suitable for slower closing press systems, whereas the physical stop system may be more suitable for faster closing press systems.

In one embodiment, pressure is applied for a time period of from 30 seconds or more, such as from 30 seconds to 10 minutes and preferably from 30 seconds to 5 minutes.

The skilled person will appreciate that the temperature should not exceed 90°C, to ensure that the rubber remains uncured.

The process can be automated, with pre-set pressures to be applied and time periods for the pressure to be applied. The process can be monitored in an automated fashion.

An auto adjust can also be programmed, such that the pressure would automatically increase if the pre-set desired thickness is not achieved.

As the sheet is reduced in thickness it will expand. The greater the rubber content the higher the expansion.

In general, a pressing force of around 500 tonnes per square metre is likely to be suitable. The skilled person will appreciate that this can be adjusted as needed.

In one embodiment, the press is at least a 50-tonne press, e.g. at least a 100-tonne press, such as a 500-tonne press or a 1000-tonne press.

In one embodiment, the platen is at least a one metre squared platen.

The sheets may, in one embodiment, undergo thickness standardisation such that they have a maximum thickness of 110mm or less, preferably 100mm or less.

For example, the sheets may undergo thickness standardisation such that they have a maximum thickness of 80mm or less, such as 70mm or less, preferably 60mm or less, e.g. 50mm or less.

In one preferred embodiment the sheets undergo thickness standardisation such that they have a maximum thickness of 40mm or less, e.g. 30mm or less.

It may be desirable to ensure a thickness of at least 3mm to ensure the sheets are easy to handle. In one embodiment, the sheets have a thickness of from 3mm to 100mm, such as from 3mm to 60mm, preferably from 5mm to 40mm.

Having uniformity of thickness for the sheets allows for uniformity of rubber removal by application of constant unit force per area in the jetting step c).

In one embodiment, all of the sheets in step b) undergo thickness standardisation such that they all have a maximum thickness that is substantially the same (±5mm, preferably ±3mm).

By having a standardised thickness for the sheets, the flows and pressures across the sheets are as uniform as possible, to assist consistent results in terms of clean separation from the reinforcement materials for all sheets.

A further benefit of the thickness standardisation step by application of pressure is that this creates a flat surface for each sheet. The water jet flows in step c) are then more effective at stripping the uncured rubber from the reinforcement material because there are no hidden or difficult to reach parts.

### Optional pre-heating

Once the sheets have undergone thickness standardisation, they may optionally be pre-heated before the jetting with pressurised water in step c).

To avoid curing of the unvulcanised rubber, it is preferred that the sheets are not heated to a temperature above 90°C.

In one embodiment, the sheets as obtained from step b) are pre-heated to a temperature of from 40 to 90°C.

In one preferred embodiment, the sheets as obtained from step b) are pre-heated to a temperature of from 40 to 80°C, or from 40 to 70°C, more preferably from 40 to 60°C, such as from 40 to 50°C or from 40 to 45°C, prior to step c).

The pre-heating may be carried out using any suitable equipment, e.g. a heating tunnel or oven. The skilled person will be aware of stenter ovens, for example, and such an oven whereby the material is moved using a conveyor belt could suitably be used. Thus a conveyor belt carrying the sheets may pass under a number of plenums through which warm air is blown. The plenums are perpendicular to the travel of the sheets on the conveyor and the sheets are heated by the warm air as they travel past.

### Jetting with pressurised water

In step c), pressurised water is jetted onto the surface of the standardised sheets, whereby the water is at a pressure of up to 500 bar.

This step may be carried out in a power wash station. The power wash station may optionally be a multi-nozzle station. There may be any suitable number of nozzles, but this could be two or three or four or more, e.g. 10 or more, or 20 or more, such as 25 or more, or 50 or more.

The pressurised water is suitably jetted onto the sheet using one or more nozzles, which may be fixed nozzles or may be nozzles that move, e.g. in an oscillating motion. The latter may be preferred as it can achieve increase coverage of pressurised water over the surface of the sheet.

The nozzles may be located above and/or below the sheet. In one embodiment there are nozzle both above and below the sheet.

In one preferred embodiment there are oscillating nozzles located both above and below the sheet, thereby directing pressurised water at both the upper and lower surface of the sheet and over the surface areas thereof.

The skilled person will appreciate that any given nozzle will have a coverage area over which it will direct water. Therefore, the skilled person can design an array of suitably spaced stationary nozzles such that the entire surface area of the sheet is impacted by pressurised water when the nozzles spray pressurised water. Alternatively, the skilled person can design an array of suitably spaced oscillating nozzles such that the entire surface area of the sheet is impacted by pressurised water over the course of an oscillation cycle during which the nozzles are spraying pressurised water.

In one embodiment, in step c) pressurised water is directed over the entire upper surface and the entire lower surface of the sheet. However, it is not essential to achieve 100% coverage; for example, good results can be achieved with pressurised water being directed over 50% or more, and especially 75% or more, or 80% or more, or 90% or more, of the surface area of the sheet.

Examples of nozzle heads that can be used include pencil jet, wash lance, fan head, and oscillating head (internal oscillating or external oscillating).

It has been determined that in step c) the water should not be used at a pressure of more than 500 bar because this leads to damage to the fabric. In one embodiment, the water is used at a pressure of less than 500 bar. In one embodiment, the water is used at a pressure of from 110 bar up to 500 bar, or from 120 bar up to 500 bar.

In one preferred embodiment, the water is used at a pressure of from 130 bar up to 500 bar, or from 130 bar up to 495 bar. In one embodiment, the water is used at a pressure of from 130 bar to 490 bar, or from 130 bar to 482 bar, or from 130 bar to 475 bar. In one embodiment, the water is used at a pressure of from 130 bar to 450 bar or from 130 bar to 400 bar, e.g. from 130 bar to 350 bar. In one embodiment, the water is used at a pressure of from 150 bar to 450 bar or from 150 bar to 400 bar, e.g. from 200 bar to 400 bar or from 225 bar to 375 bar.

The skilled person will also appreciate that the distance of the nozzle from the surface of the sheet can be altered as desired to affect the slamming force of the water (which is a function of height).

In one embodiment, the distance of the water jet nozzle from the substrate is from 10 to 200mm, or from 15mm to 200mm, or from 20 to 200mm, such as from 30 to 150mm.

Preferably the distance is from 40 to 100mm, more preferably from 40 to 90mm, e.g. from 40mm to 80mm or from 60mm to 80mm, and especially from 70mm to 80mm. These distances have been found to give the best results in terms of clearing the rubber over a wide area.

In general, water jet deflection onto an open wire mesh conveyor may be seen to occur at a distance of 200mm from the substrate. Therefore, in one embodiment the distance is less than 200mm, e.g. from 30 to 150mm and especially from 40 to 100mm.

The angle of the nozzle in relation to the substrate can also be varied. When 90° is completely perpendicular, in one embodiment the angle is from 60 to 90°, e.g. from 62° to 88° or from 70 to 88°. In one embodiment, the angle of the nozzle in relation to the substrate is about 88°.

In this regard, it has been determined that the area over which stripping of uncured rubber occurs can be significantly increased by angling the jet stream within the range from 60 to 90°, e.g. from 62° to 88° or from 70 to 88°. For example, for an 8mm oscillating head held at a distance of 80mm and an angle of 88° to the plane of the substrate, an area 80mm wide and 5mm deep can be stripped.

In one embodiment, the thickness of the rubber material to be stripped is from 5mm to 10mm thick.

In one embodiment, the speed of stripping the rubber material is from 2 to 4 metres per minute, such as from 2.5 to 3.5 metres per minutes, e.g. about 2.8 metres per minute.

As noted above, in the present invention the sheets of composite product (as provided in step a) or as obtained in step b-i)) undergo a thickness standardisation. It has been found that by using the specific standardised thickness of sheet for the composite product, then in step c) the water strips the uncured rubber from composite product, resulting in a mixture comprising uncured rubber and reinforcement material.

Thus, beneficially, there is a peeling effect on the rubber, rather than a pulverisation effect.

The uncured rubber can then be easily removed from the reinforcement material.

It has been found that by using the process according to the invention the uncured rubber separates from the reinforcement material in the form of granules and/or crumbs. Thus, advantageously, it is in a particulate form which can readily be removed and processed.

The water used in step c) may be at ambient temperature or may be heated. In one embodiment, the water used is heated; this has been found to improve the peeling process.

In one embodiment, the water may be pre-heated to temperatures of up to 90°C, preferably 40 to 90°C, before it is jetted onto the sheets.

The skilled person will appreciate that a result of pressurising water to a high pressure is that the temperature of the water will increase; however, in the present invention external heat is provided to the water to achieve a controlled temperature.

The heating of the water may, for example, be carried out using burner heaters to heat the water before it is jetted onto the sheets. The skilled person will appreciate that the burner temperature may be set higher than the desired temperature of the water; for example, the burner temperature may be set as high as 150°C, because the water will not reach the same temperature as the burner itself.

In one preferred embodiment, the water is pre-heated to temperatures of 40 to 80°C, or from 50 to 70°C, before it is jetted onto the sheets.

In one embodiment, pre-heated water is used so as to heat the uncured rubber to a temperature of from 35 to 50°C, preferably from 40 to 50°C, e.g. from 40 to 45°C.

In one preferred embodiment, the water is pre-heated to about 80°C; this may have the effect of heating the uncured rubber to a temperature of about 45°C. In another preferred embodiment, the water is pre-heated, using a burner, to about 60°C; this may have the effect of heating the uncured rubber to a temperature of about 40°C.

In one embodiment, the water is supplied as cold water, e.g. at a temperature of about 5 to 15°C, such as about 9°C, and the water is then heated to due to pressurisation, e.g. resulting in a substrate temperature in the range of 20 to 25°C. This may in particular be useful when the reinforcement material is metal.

In another embodiment, the reinforcement material is fabric, and the water is supplied at a temperature in the range of from 35 to 50°C, e.g. about 39°C. It may suitably be that the pressure is from 275 to 340 bar, with the most preferred pressure being 340 bar especially when using a 5mm thick substrate. No fibre damage is seen at 340 bar, other than any fabric dip coating being removed; at 275 bar the fabric dip coating will remain largely intact.

In one embodiment the fabric reinforcement material will reach a temperature in the range of from 30 to 40°C, such as about 36°C.

The flow rate used for the water may, for example, be from 5 litres per minute to 80 litres per minute or higher, such as from 7 litres per minute to 60 litres per minute or higher. In one embodiment, the flow rate is from 5 litres per minute to 50 litres per minute, such as from 7 litres per minute to 40 litres per minute. In one embodiment, the flow rate is from 5 litres per minute to 30 litres per minute, such as from 7 litres per minute to 15 litres per minute.

Especially when the reinforcement material is fabric, in one embodiment the standardised sheets are restrained between two conveyors to minimize movement and ensure a full stripping effect. The conveyors may suitably be mesh conveyors. The upper conveyor may, for example, be an open wire mesh, e.g. with 10 to 20mm open wire meshing, to limit water jet deflection. The lower conveyor may, for example, be a solid belt, or a slatted steel conveyor.

The use of a lower conveyor that includes openings, such as holes or slats, may be beneficial, in that this allows water and stripped uncured rubber material to pass through. In one embodiment, the lower conveyor includes openings, e.g. cut holes, and these may for example have a maximum diameter of from 5 to 20mm, such as about 10mm. The openings may, for example, make up from 50-60% of the surface area of the lower conveyor.

The lower conveyor may be connected to an enclosure which is positioned to catch the stripped uncured rubber material.

### Rubber

During step c) (the "power wash" stage), the uncured rubber peels off from the reinforcement materials and therefore is separated from these reinforcement materials. It is no longer associated with the metal and/or fabric reinforcement materials and it forms crumbs and/or granules that can be readily removed.

Therefore, as a further step of the process, the uncured rubber can be removed from the mixture, e.g. the rubber may be drawn off.

The uncured rubber, e.g. in the form of rubber granules, may optionally be dried.

The water content that is associated with the water jetting process may, for example, mean that a drying regime should be selected that is capable of delivering 1kwh/kg of rubber.

The uncured rubber can be dried using standard drying technologies. This may, for example, be by continuous drying, or by fluidised bed drier. In one embodiment the rubber drying is carried out using air drying or radio frequency drying. One preferred method of drying is by rotary dryer with warm air supply held at, for example 70 to 90°C, such as about 80°C.

The skilled person will appreciate that the drying should be carried out under conditions that do not cure the rubber. The aim is to remove water but for the rubber to remain in uncured form so that it can be re-used. In one embodiment, the drying is carried out at temperatures of up to 90°C, e.g. from 50 to 80°C.

It is desirable that the maximum rubber crumb temperature should not be greater than 90°C. Using drying by rotary dryer with an about 80°C warm air supply, for example, it is possible to ensure that the maximum crumb temperature is 65°C.

In one preferred embodiment of the invention, the uncured rubber is conveyed across a vibratory conveyor and through an oven that is mounted with warm air plenums. The plenums are suitably located above and below the conveyor.

The uncured rubber may optionally undergo rubber conditioning.

The uncured rubber, preferably in dried form, may be packed for storage and/or transportation.

In one embodiment the dried rubber granules are fed into a hopper and into a packing machine. In one preferred embodiment, the packing machine is a vertical form fill and seal machine.

The rubber may suitably be packed into bags such as low melt EVA bags for storage.

The thus-obtained dried rubber is in a form where it is uncured (unvulcanised) and can agglomerate into a bale. It is ready for direct use in downstream compounding.

In one embodiment, therefore, the uncured rubber is subsequently re-compounded.

As the rubber is still unvulcanised and is free from metal and fabric, the rubber may be used in the original application or may be compounded for an alternative application.

### Metal

During step c), the uncured rubber peels off from the metal and/or fabric reinforcement materials and therefore is separated from these reinforcement materials.

Therefore, as a further step of the process, the process may include a step of separating metal reinforcement materials from the mixture, e.g. by use of a magnet.

Thus the metal can be drawn off from the body of separated materials using a magnet, such as a drum magnet or over-band magnet.

The metal reinforcement material, as separated from the mixture, can be packed for storage and/or transportation.

In one embodiment, the metal reinforcement material is dropped into a collection receptacle.

### Fabric

During step c), the uncured rubber peels off from the metal and/or fabric reinforcement materials and therefore is separated from these reinforcement materials.

Therefore, as a further step of the process, the process may include a step of separating fabric from the mixture, e.g. by use of a filter or screen or by aspiration or floatation.

Thus, in one embodiment the fabric can be drawn off from the body of separated materials by the use of sieves, e.g. moving sieves. The fabric may be in the form of strips or strands or fibres. The fabric can therefore be caught by a moving sieve which rotates and releases the fabric, e.g. into a collection receptacle.

In another embodiment the fabric can be drawn off from the body of separated materials by the use of floatation.

In yet another embodiment the fabric can be drawn off from the body of separated materials by being dried with the rubber and then withdrawn by aspiration.

In one embodiment, the fabric can be drawn off from the body of separated materials by means of a vibrated pintle belt. Lengths of fabric are caught on top of the pintles, whilst the rubber crumb falls to the base of the pintles and onto the belt whereby they are vibrated off the belt. The fabric is collected as the belt returns on the downward trajectory.

A pintle belt can be made from any conventional belt substrate, such as rubber or PTFE coated glass fibre materials. In one embodiment the pintles are attached or moulded to the belt substrate perpendicular to the plane of the belt. The pintles may be made of any substrate, such as rubber or metal. The pintles may be positioned over part or all of the surface of the belt substrate. The pintles may be spaced apart by any suitable distance, e.g. up to 100mm, or up to 50mm, but preferably by a distance from 5mm to 45mm. The pintle belt may, in one embodiment, be used at an angle of between 45° and 75°, e.g. about 60°.

The fabric reinforcement material, as separated from the mixture, can be packed for storage and/or transportation.

In one embodiment, the fabric reinforcement material is dropped into a collection receptacle.

### Examples

### Example 1: pressure of water jetting on standardised sheet samples

Samples of fabric friction plies (uncured rubber plus nylon fabric fibres), metal friction material (uncured rubber plus steel) and uncured tyre composite material (uncured rubber plus nylon fabric fibres plus steel) were provided.

Each was provided in the form of sheets or was cut into sheets.

The sheets were then pressed, by applying weight to a metal plate as a force, to obtain a standardised thickness. The examples tested a range of thicknesses for each sample of sheets, from 30mm to 100mm.

The standardised sheets were then each subject to jetting by pressurised water over both their upper and lower surfaces, using pre-defined nozzle and pressure configurations.

In some tests the substrate was pre-heated before the water jetting. In some tests the water was pre-heated before jetting.

The details and results are shown in the table below:

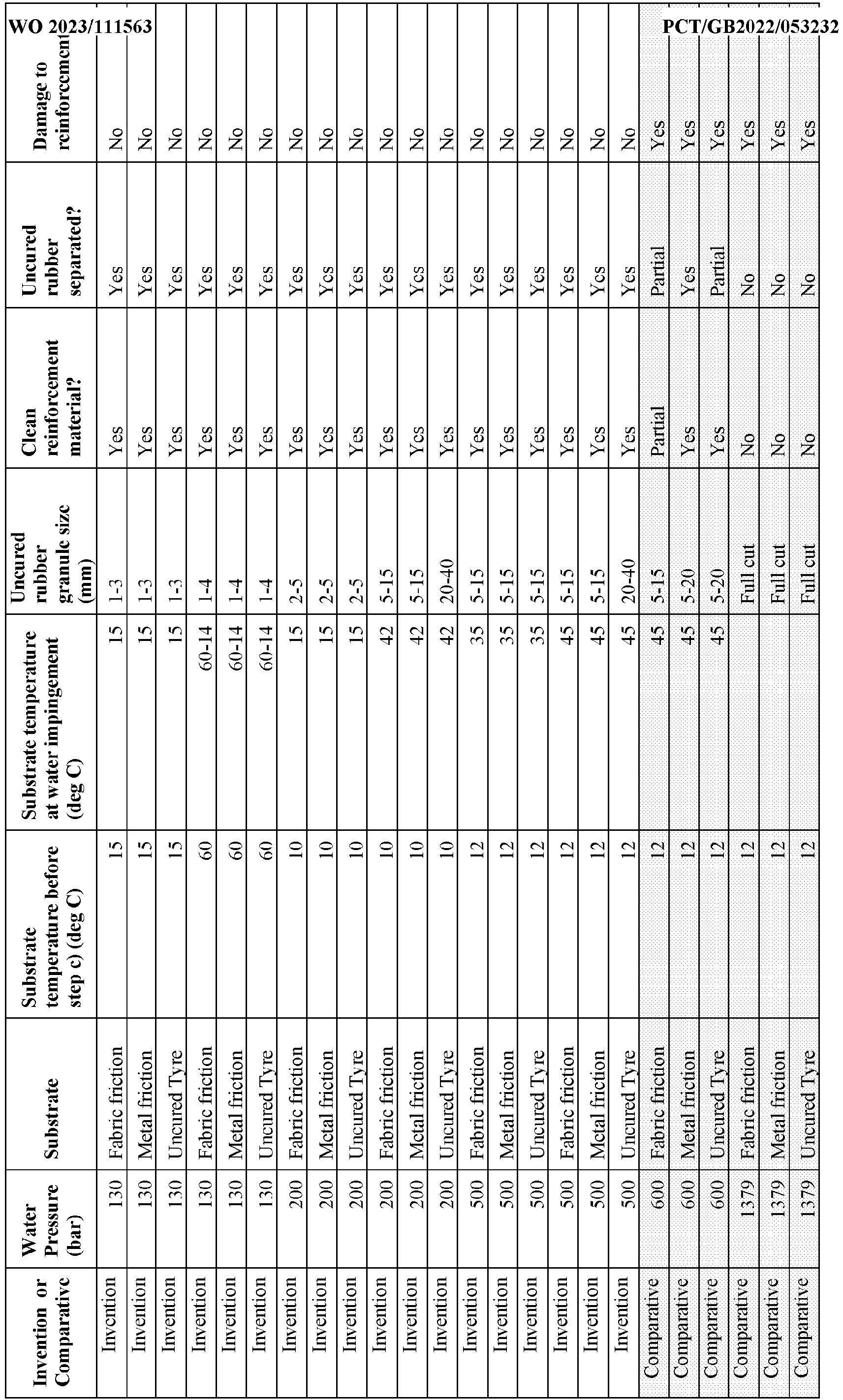

It can be seen that if pressure is used that is over 500 bar then it is no longer possible to obtain clean separation of the uncured rubber from the reinforcement without damage to the reinforcement, for example fabric erosion occurs, the uncured rubber is contaminated with fabric or metal, and the materials are not in a form where they are able to be re-used.

In contrast, it was found that if pressure is used that is 500 bar or lower, the rubber can be removed cleanly from the reinforcement, with granules forming that can be readily removed and with the reinforcement remaining undamaged and reusable. The results were good for standardised sheet thicknesses across the range of 30mm to 100mm.

Therefore, a benefit of the present invention is that it allows recovery of uncured rubber in a re-usable form and this uncured rubber is of a clean quality such that it can be re-compounded as a virgin material.

It is advantageous from a "green" perspective that this reduces the requirements for virgin feedstocks and reduces the associated environmental impacts such as carbon emissions and natural resource consumption.

The process of the invention beneficially also allows both the metal and the fabric reinforcement materials to be separated and recovered in an undamaged form whereby these component materials can be re-used.

### Example 2: distance and angle for jetting

Various metal and fabric friction sheets were provided, which had been standardised in accordance with the invention, and placed onto a metal wire mesh conveyor. The conveyor was 88cm in length and was made from 5mm diameter wire in a linked geometry that presented 10mm triangular openings.

A water jet lance was clamped by a fixed bracket that allowed the nozzle to be moved in relation to the substrate. An 8mm diameter internal oscillating water jet nozzle was then used to strip rubber from the standardised sheets of composite product.

The water jetting unit used was a variable pressure and temperature unit that had a maximum pressure of 500 bar and maximum temperature of 95°C. The maximum water flow rate was 30 litres per minute.

The lance and 8mm water jet nozzle with internal oscillation was positioned at various distances and angles in relation to the material.

Uncured rubber was removed using distances in the range of 15mm to 200mm. The results indicated that the optimal distance from the substrate, to ensure that a wide area of uncured rubber is successfully removed, was about 40-100mm, especially about 60-80mm. In contrast, as the lance was moved further from the substrate, e.g. at a distance of about 200mm, the holding mesh conveyor deflected the flow.

The results showed that a range of angles could be used successfully. The results in particular indicated that beneficial angles for ensuring that uncured rubber is successfully removed from a wide area are from 62° to 90°, especially from 70 to 88°.

### Example 3: exemplary drying conditions for the rubber

Two samples of rubber were taken that had been separated from fabric friction materials in accordance with the invention. The rubber samples were dried (i) using an air circulating drying oven and (ii) in a rotary drier. Temperatures were measured using a contacts K-type thermocouple.

Drying oven: A sample weighing 101.2 grammes was placed into a drying oven. The set point for the dryer was set at 80°C. After 1 hour and 36 minutes the sample weight loss had stabilised, and the sample was found to weigh 67.4 grammes. The moisture content associated with water jetting was found to be 33.4%. The final rubber temperature was found to be 72.3°C.

Rotary drier: A sample weighing 235.6 grammes was placed into a rotary drier. The temperature of the dryer was set to 80°C. The rubber weight loss stabilised after 16 minutes was found to be 67.1 grammes and the moisture content found to be 28.48%. The final rubber temperature was found to be 65°C.

## Claims

1. A process for the recovery of component materials from composite products, the process comprising:
a) providing a composite product that comprises a plurality of component materials, said component materials including uncured rubber and reinforcement material selected from fabric and/or metal;
b) preparing one or more standardised sheets of composite product, wherein each standardised sheet has a maximum thickness of 125mm or less;
c) jetting pressurised water onto one or more surface of the standardised sheets, whereby the water is at a pressure of up to 500 bar, thereby stripping the uncured rubber from the reinforcement material and resulting in a mixture of uncured rubber fabric and reinforcement material.

2. The process according to claim 1, wherein the composite product as provided in step a) comprises uncured rubber, fabric reinforcement material and metal reinforcement material.

3. The process according to claim 1 or claim 2, wherein the composite product as provided in step a) comprises fabric reinforcement material that is selected from: rayon, nylon, polyester and aramid, and combinations thereof.

4. The process according to any one of the preceding claims wherein the composite product as provided in step a) comprises metal reinforcement material that is steel.

5. The process according to any one of the preceding claims wherein step b) comprises preparing one or more standardised sheets of composite product, wherein each standardised sheet has a maximum thickness of 110mm or less, such as 100mm or less.

6. The process according to any one of the preceding claims wherein in step b) the sheets undergo thickness standardisation such that they all have a maximum thickness that is the same, within a tolerance of ±5mm.

7. The process according to any one of claims 1 to 6, wherein the composite product as provided in step a) is not in sheet form and wherein step b) comprises:
b-i) cutting the composite product into the form of one or more cut sheets;
and then
b-ii) carrying out thickness standardisation on each cut sheet, such that each sheet has a thickness of 125mm or less, such as 100mm or less.

8. The process according to any one of claims 1 to 6, wherein the composite product as provided in step a) is in sheet form and wherein step b) comprises:
b-0) carrying out thickness standardisation, such that each sheet has a thickness of 125mm or less, such as 100mm or less.

9. The process according to claim 7 wherein the sheets as obtained in step b-i) are 500mm thick or less, such as from 150 to 400mm thick,
or the process according to claim 8 wherein the sheets as provided in step a) are 500mm thick or less, such as from 150 to 400mm thick.

10. The process according to any one of the preceding claims wherein the thickness standardisation step comprises the application of pressure onto each sheet, such as by using a calendar press, belt press or hydraulic press.

11. The process according to any one of the preceding claims wherein in step b) the sheets undergo thickness standardisation such that they have a maximum thickness of 60mm or less, such as from 3mm to 40mm.

12. The process according to any one of the preceding claims wherein before step c) the sheets as obtained from step b) are pre-heated to a temperature of from 40 to 90°C.

13. The process according to any one of the preceding claims wherein in step c) the water is pre-heated to 40 to 90°C before it is jetted onto the sheets.

14. The process according to any one of the preceding claims wherein in step c) there are nozzles located both above and below the sheet, thereby directing pressurised water at both the upper and lower surface of the sheet.

15. The process according to any one of the preceding claims wherein in step c) pressurised water is directed over 75% or more of the surface area of the sheet.

16. The process according to any one of the preceding claims wherein in step c) oscillating nozzles are used to jet the pressurised water across the surface of the sheet.

17. The process according to any one of the preceding claims wherein in step c) the water is used at a pressure of (a) from 130 bar up to 500 bar, or (b) from 130 bar up to 495 bar, or (c) from 150 bar to 450 bar, or (d) from 200 to 400 bar.

18. The process according to any one of the preceding claims wherein the process further comprises one or more of, such as two or more of, the following steps:
d) separating metal from the mixture, e.g. by use of a magnet; and/or
e) separating fabric from the mixture, e.g. by use of a filter or screen or by aspiration or floatation; and/or
f) separating the uncured rubber from the mixture, e.g. the rubber may be drawn off.

19. The process according to claim 18, wherein the uncured rubber is separated and then dried, and optionally is then packed for storage and/or transportation.

20. The process according to claim 18 or claim 19, wherein the uncured rubber is subsequently re-compounded or re-used.

21. The process according to any one of claims 18 to 20, wherein the metal is subsequently re-used.

22. The process according to any one of claims 18 to 21, wherein the fabric is subsequently re-used.

## Patentansprüche

1. Verfahren zur Rückgewinnung von Komponentenmaterialien aus Verbundprodukten, wobei das Verfahren Folgendes umfasst:
a) Bereitstellen eines Verbundproduktes, das eine Vielzahl von Komponentenmaterialien umfasst, wobei die Komponentenmaterialien einen unvulkanisierten Gummi und ein Verstärkungsmaterial ausgewählt aus Gewebe und/oder Metall umfassen;
b) Vorbereiten einer oder mehrerer standardisierter Platten des Verbundprodukts, wobei jede standardisierte Platte eine maximale Dicke von 125 mm oder weniger aufweist;
c) Sprühen von Druckwasser auf eine oder mehrere Flächen der standardisierten Platten, wobei das Wasser einen Druck von bis zu 500 bar hat, und dadurch Ablösen des unvulkanisierten Gummis von dem Verstärkungsmaterial und Resultieren in einem Gemisch aus dem unvulkanisierten Gummigewebe und dem Verstärkungsmaterial.

2. Verfahren nach Anspruch 1, wobei das Verbundprodukt, das in Schritt a) bereitgestellt wird, den unvulkanisierten Gummi, das Verstärkungsmaterial aus Gewebe und das Verstärkungsmaterial aus Metall umfasst.

3. Verfahren nach Anspruch 1 oder Anspruch 2, wobei das Verbundprodukt, das in Schritt a) bereitgestellt wird, das Verstärkungsmaterial aus Gewebe umfasst, das ausgewählt wird aus: Rayon, Nylon, Polyester und Aramid sowie Kombinationen davon.

4. Verfahren nach einem der vorhergehenden Ansprüche, wobei das Verbundprodukt, das in Schritt a) bereitgestellt wird, das Verstärkungsmaterial aus Metall umfasst, das Stahl ist.

5. Verfahren nach einem der vorhergehenden Ansprüche, wobei Schritt b) Vorbereiten einer oder mehrerer standardisierter Platten des Verbundprodukts umfasst, wobei jede standardisierte Platte eine maximale Dicke von 110 mm oder weniger aufweist, zum Beispiel 100 mm oder weniger.

6. Verfahren nach einem der vorhergehenden Ansprüche, wobei die Platten in Schritt b) einer Dickenstandardisierung unterzogen werden, sodass sie alle eine maximale Dicke aufweisen, die innerhalb einer Toleranz von ±5 mm gleich ist.

7. Verfahren nach einem der Ansprüche 1 bis 6, wobei das Verbundprodukt, das in Schritt a) bereitgestellt wird, keine Plattenform hat und wobei Schritt b) Folgendes umfasst:
b-i) Schneiden des Verbundprodukts in die Form einer oder mehrerer geschnittener Platten; und dann
b-ii) Ausführen der Dickenstandardisierung für jede geschnittene Platte, so dass jede Platte eine Dicke von 125 mm oder weniger aufweist, zum Beispiel 100 mm oder weniger.

8. Verfahren nach einem der Ansprüche 1 bis 6, wobei das Verbundprodukt, das in Schritt a) bereitgestellt wird, eine Plattenform hat und wobei Schritt b) Folgendes umfasst:
b-0) Ausführen der Dickenstandardisierung, so dass jede Platte eine Dicke von 125 mm oder weniger aufweist, zum Beispiel 100 mm oder weniger.

9. Verfahren nach Anspruch 7, wobei die Platten, die gemäß Schritt b-i) erhalten werden, 500 mm oder weniger dick sind, zum Beispiel von 150 bis 400 mm dick,
oder Verfahren nach Anspruch 8, wobei die Platten, die in Schritt a) bereitgestellt werden, 500 mm oder weniger dick sind, zum Beispiel von 150 bis 400 mm dick.

10. Verfahren nach einem der vorhergehenden Ansprüche, wobei der Schritt der Dickenstandardisierung die Anwendung von Druck auf jede Platte umfasst, zum Beispiel durch Verwenden einer Kalenderpresse, einer Bandpresse oder einer hydraulischen Presse.

11. Verfahren nach einem der vorhergehenden Ansprüche, wobei die Platten in Schritt b) einer Dickenstandardisierung derart unterzogen werden, dass sie eine maximale Dicke von 60 mm oder weniger aufweisen, zum Beispiel von 3 mm bis 40 mm.

12. Verfahren nach einem der vorhergehenden Ansprüche, wobei vor Schritt c) die Platten, die durch Schritt b) erhalten werden, auf eine Temperatur von 40 bis 90 °C vorgeheizt werden.

13. Verfahren nach einem der vorhergehenden Ansprüche, wobei in Schritt c) das Wasser auf 40 bis 90 °C vorgeheizt wird, bevor es auf die Platten gesprüht wird.

14. Verfahren nach einem der vorhergehenden Ansprüche, wobei sich in Schritt c) Düsen sowohl über als auch unter der Platte befinden, wodurch Druckwasser sowohl auf die obere Fläche als auch auf die untere Fläche der Platte gerichtet wird.

15. Verfahren nach einem der vorhergehenden Ansprüche, wobei in Schritt c) Druckwasser auf 75 % oder mehr des Flächenbereichs der Platte gerichtet wird.

16. Verfahren nach einem der vorhergehenden Ansprüche, wobei in Schritt c) oszillierende Düsen verwendet werden, um das Druckwasser über die Fläche der Platte zu sprühen.

17. Verfahren nach einem der vorhergehenden Ansprüche, wobei in Schritt c) das Wasser mit einem Druck (a) von 130 bar bis zu 500 bar oder (b) von 130 bar bis zu 495 bar oder (c) von 150 bar bis zu 450 bar oder (d) von 200 bis 400 bar verwendet wird.

18. Verfahren nach einem der vorhergehenden Ansprüche, wobei das Verfahren ferner einen oder mehrere, zum Beispiel zwei oder mehrere, der folgenden Schritte umfasst:
d) Trennen von Metall von dem Gemisch, zum Beispiel durch Verwendung eines Magneten; und/oder
e) Trennen von Gewebe von dem Gemisch, zum Beispiel durch Verwendung eines Filters oder Siebs oder durch Absaugung oder Flotation; und/oder
f) Trennen des unvulkanisierten Gummis von dem Gemisch, zum Beispiel kann der Gummi abgezogen werden.

19. Verfahren nach Anspruch 18, wobei der unvulkanisierte Gummi getrennt und dann getrocknet wird und dann optional zur Lagerung und/oder zum Transport verpackt wird.

20. Verfahren nach Anspruch 18 oder Anspruch 19, wobei der unvulkanisierte Gummi anschließend wieder vermischt oder wiederverwendet wird.

21. Verfahren nach einem der Ansprüche 18 bis 20, wobei das Metall anschließend wiederverwendet wird.

22. Verfahren nach einem der Ansprüche 18 bis 21, wobei das Gewebe anschließend wiederverwendet wird.

## Revendications

1. Procédé de récupération de matériaux constitutifs à partir de produits composites, le procédé comprenant :
a) la fourniture d'un produit composite qui comprend une pluralité de matériaux constitutifs, lesdits matériaux constitutifs comprenant du caoutchouc non vulcanisé et un matériau de renforcement choisi parmi du tissu et/ou du métal ;
b) la préparation d'une ou plusieurs feuilles normalisées de produit composite, chaque feuille normalisée ayant une épaisseur maximale de 125 mm ou moins ;
c) la projection d'eau sous pression sur une ou plusieurs surfaces des feuilles normalisées, l'eau étant à une pression allant jusqu'à 500 bars, permettant d'enlever le caoutchouc non vulcanisé du matériau de renforcement et d'obtenir un mélange de tissu de caoutchouc non vulcanisé et de matériau de renforcement.

2. Procédé selon la revendication 1, dans lequel le produit composite tel que fourni à l'étape a) comprend du caoutchouc non durci, un matériau de renfort en tissu et un matériau de renfort métallique.

3. Procédé selon la revendication 1 ou la revendication 2, dans lequel le produit composite tel que fourni à l'étape a) comprend un matériau de renfort en tissu qui est choisi parmi : la rayonne, le nylon, le polyester et l'aramide, et des combinaisons de ceux-ci.

4. Procédé selon l'une quelconque des revendications précédentes, dans lequel le produit composite tel que fourni à l'étape a) comprend un matériau de renforcement métallique qui est de l'acier.

5. Procédé selon l'une quelconque des revendications précédentes, dans lequel l'étape b) comprend la préparation d'une ou plusieurs feuilles standardisées de produit composite, dans lequel chaque feuille standardisée a une épaisseur maximale de 110 mm ou moins, par exemple de 100 mm ou moins.

6. Procédé selon l'une quelconque des revendications précédentes, dans lequel, à l'étape b), les feuilles subissent une standardisation d'épaisseur de telle sorte qu'elles aient toutes une épaisseur maximale qui est la même, dans une tolérance de ±5 mm.

7. Procédé selon l'une quelconque des revendications 1 à 6, dans lequel le produit composite tel que fourni à l'étape a) n'est pas sous forme de feuille et dans lequel l'étape b) comprend :
b-i) le découpage du produit composite sous la forme d'une ou plusieurs feuilles découpées ; puis
b-ii) la réalisation d'une normalisation de l'épaisseur sur chaque feuille découpée, de telle sorte que chaque feuille ait une épaisseur de 125 mm ou moins, telle que 100 mm ou moins.

8. Procédé selon l'une quelconque des revendications 1 à 6, dans lequel le produit composite tel que fourni à l'étape a) est sous forme de feuille et dans lequel l'étape b) comprend :
b-0) la réalisation d'une normalisation de l'épaisseur, de telle sorte que chaque feuille ait une épaisseur de 125 mm ou moins, telle que 100 mm ou moins.

9. Procédé selon la revendication 7, dans lequel les feuilles obtenues à l'étape b-i) ont une épaisseur de 500 mm ou moins, telle que 150 à 400 mm d'épaisseur,
ou procédé selon la revendication 8, dans lequel les feuilles fournies à l'étape a) ont une épaisseur de 500 mm ou moins, telle que 150 à 400 mm d'épaisseur.

10. Procédé selon l'une quelconque des revendications précédentes, dans lequel l'étape de normalisation de l'épaisseur comprend l'application d'une pression sur chaque feuille, telle qu'en utilisant une presse à calandre, une presse à bande ou une presse hydraulique.

11. Procédé selon l'une quelconque des revendications précédentes, dans lequel, à l'étape b), les feuilles subissent une standardisation d'épaisseur de telle sorte qu'elles aient une épaisseur maximale de 60 mm ou moins, telle que 3 mm à 40 mm.

12. Procédé selon l'une quelconque des revendications précédentes, dans lequel, avant l'étape c), les feuilles obtenues à partir de l'étape b) sont préchauffées à une température de 40 à 90°C.

13. Procédé selon l'une quelconque des revendications précédentes, dans lequel, à l'étape c), l'eau est préchauffée à une température de 40 à 90 °C avant d'être projetée sur les feuilles.

14. Procédé selon l'une quelconque des revendications précédentes, dans lequel, à l'étape c), des buses sont situées à la fois au-dessus et au-dessous de la feuille, dirigeant ainsi de l'eau sous pression à la fois sur la surface supérieure et inférieure de la feuille.

15. Procédé selon l'une quelconque des revendications précédentes, dans lequel, à l'étape c), de l'eau sous pression est dirigée sur 75 % ou plus de la surface de la feuille.

16. Procédé selon l'une quelconque des revendications précédentes, dans lequel, à l'étape c), des buses oscillantes sont utilisées pour projeter l'eau sous pression sur la surface de la feuille.

17. Procédé selon l'une quelconque des revendications précédentes, dans lequel, à l'étape c), l'eau est utilisée à une pression (a) de 130 bars à 500 bars, ou (b) de 130 bars à 495 bars, ou (c) de 150 bars à 450 bars, ou (d) de 200 à 400 bars.

18. Procédé selon l'une quelconque des revendications précédentes, dans lequel le procédé comprend en outre une ou plusieurs des étapes suivantes, par exemple deux ou plusieurs des étapes suivantes :
d) la séparation du métal depuis le mélange, par exemple en utilisant un aimant ; et/ou
e) la séparation du tissu depuis le mélange, par exemple en utilisant un filtre ou un tamis ou par aspiration ou flottation ; et/ou
f) la séparation du caoutchouc non durci depuis le mélange, par exemple le caoutchouc peut être retiré.

19. Procédé selon la revendication 18, dans lequel le caoutchouc non durci est séparé puis séché, et est ensuite éventuellement emballé pour le stockage et/ou le transport.

20. Procédé selon la revendication 18 ou la revendication 19, dans lequel le caoutchouc non durci est ensuite recomposé ou réutilisé.

21. Procédé selon l'une quelconque des revendications 18 à 20, dans lequel le métal est ultérieurement réutilisé.

22. Procédé selon l'une quelconque des revendications 18 à 21, dans lequel le tissu est ultérieurement réutilisé.
